# EUROPÄISCHE PATENTANMELDUNG

(11) **EP 1 120 945 A1**
(43) Veröffentlichungstag der Anmeldung: **01.08.2001**
(21) Anmeldenummer: 00101551.0
(22) Anmeldetag: 27.01.2000
(51) Int. Cl.: H04L 29/06, H04Q 7/22, H04Q 7/32

(54) **Zuordnung einer Serveradresse zu einem Endgerät**

(71) Anmelder: TELEFONAKTIEBOLAGET LM ERICSSON (publ), 126 25 Stockholm (SE)
(72) Erfinder: Feyerabend, Konrad, 31139 Hildesheim (DE); Lohmar, Thorsten, 52062 Aachen (DE)
(74) Vertreter: Mohsler, Gabriele

(57) **Zusammenfassung**

Die vorliegende Erfindung betrifft ein Verfahren zur Zuordnung einer Adresse eines datendienstanbietenden Servers zu einer Kommunikationsvorrichtung wie beispielsweise einem Mobilfunkgerät oder einer SIM-Karte. Bei der Zuordnung wird die Serveradresse aus einer Menge von Adressenbezeichnern ausgewählt. Jeder Adressenbezeichner bezeichnet unabhängig von der aktuellen Serverkonfiguration des Kommunikationsnetzes einen gültigen Server. Die Serveradresse kann aus einem festen und einem variablen Anteil zusammengesetzt werden. Weiterhin können die Adressenbezeichner, beispielsweise mittels eines sogenannten DNS Servers aktualisiert werden. Das beschriebene Serveradressenzuordnungsverfahren verbessert die Skalierbarkeit des Kommunikationssystems und bietet eine effiziente Maßnahme zur Lastverteilung sowohl für datendienstanbietende Anwendungsserver als auch für sogenannte DNS Server. Weiterhin betrifft die Erfindung eine entsprechende Kommunikationsvorrichtung zur Zuordnung einer Serveradresse, sowie ein entsprechendes Kommunikationssystem und Computerprogramm.

## Beschreibung

### Gebiet der Erfindung

Die Erfindung stammt aus dem Gebiet der Datenkommunikation und bezieht sich auf ein Verfahren zur Zuordnung einer Serveradresse zu einer Kommunikationsvorrichtung, auf eine Kommunikationsvorrichtung zur Anforderung eines Datendienstes mit Hilfe einer zugeordneten Serveradresse, sowie auf ein Kommunikationssystem, bei dem serverbasierte Datendienste von Kommunikationsendgeräten mittels zugeordneter Serveradressen angefordert werden können.

### Hintergrund der Erfindung

Eine steigende Kundennachfrage nach Datendiensten, bei denen Kommunikationsendgeräte, insbesondere Mobiltelefone, als Datenterminal genutzt werden, veranlaßt die Betreiber von Kommunikationsnetzen, ihren Kunden vermehrt Zugänge zum Internet oder mit Hilfe sogenannter Anwendungsserver, die im netzbetreibereigenen Paketdatennetz (IP Netz) angesiedelt sind, eigene Datendienste anzubieten. Solche Anwendungsserver stellen beispielsweise aktuelle Nachrichten, Fußballergebnisse, Verkehrsinformationen oder Börsenkurse bereit. Beispiele solcher Dienste sind der IMODE (TM) Dienst von NTT Docomo, der SkyWalker (TM) oder der SkyWeb (TM) Dienst der Digital Phone Group.

Es gibt Kommunikationsendgeräte wie Mobiltelefone, die vom Datendienstanbieter vertrieben werden, und die einen speziellen derartigen Datendienst bieten. Zu dessen Aufruf haben diese Geräte oft eine einfache Benutzerschnittstelle, wie eine separate Taste der Tastatur, mit der ein solcher Dienst, beispielsweise ein Verkehrsinformationsdienst, angefordert werden kann. Wenn also ein Benutzer den Verkehrsinformationsdienst durch Tastendruck anfordert, sendet das Mobiltelefon eine Dienstanforderung. Der Adressat dieser Dienstanforderung ist ein entsprechender Anwendungsserver, welcher durch seine sogenannte Internet Protokoll Adresse, im folgenden IP-Adresse genannt, identifiziert ist. Die IP-Adresse dieses Anwendungsservers, dessen Datendienst das Mobiltelefon aufrufen kann, ist dazu in einem Festwertspeicher des Gerätes unveränderlich abgespeichert. Alternativ kann die IP-Adresse auch vom Benutzer eingegeben und gespeichert werden.

Eine steigende Nachfrage nach dem Datendienst kann die Verarbeitungskapazität des Anwendungsservers erschöpfen. In diesem Fall wird der Dienstanbieter einen weiteren Anwendungsserver für diesen Datendienst einrichten, um die Nachfrage zu befriedigen. Dieser weitere Anwendungsserver wird mit Hilfe einer anderen IP-Adresse identifiziert, da unterschiedliche physikalische Server nicht dieselbe IP-Adresse haben sollten.

Damit die Einrichtung eines weiteren Anwendungsservers erfolgreich als Lastverteilungsmaßnahme wirken kann, ist für einen Teil der im Umlauf befindlichen Kommunikationsendgeräte mit fest gespeicherten IP-Adressen eine Hardwareänderung, oder mit anderen Worten, das Austauschen des entsprechenden Speicherchips, erforderlich. Alternativ kann die Produktion geändert werden, so daß als Neuauflage nur noch Endgeräte hergestellt werden, welche die IP-Adresse des weiteren Anwendungsservers enthalten. Beide Möglichkeiten sind wenig flexibel, sowie mit Kosten und zum Teil hohem logistischen Aufwand verbunden. Gleiches gilt für Endgeräte, bei denen die IP-Adresse vom Benutzer eingegeben und gespeichert wird. Neben dem Aufwand, einen Teil der Benutzer über die geänderte IP-Adresse zu informieren, besteht hier eine Unsicherheit über die Wirksamkeit der Lastverteilungsmaßnahme. Der jeweilige Benutzer ist nicht gezwungen, die IP-Adresse zu ändern, weil er unter der bisher bekannten IP-Adresse weiterhin einen Anwendungsserver erreicht, der den gewünschten Datendienst anbietet.

Eine bekannte Lösung zur Lastverteilung von Datenverkehr auf mehrere Server bietet das sogenannte LSNAT-Verfahren, welches im RFC 2391 "Load Sharing using IP Network Address Translation (LSNAT)" von P. Srisuresh und D. Gan beschrieben und durch die IETF veröffentlicht worden ist. Bei diesem Verfahren werden Paketdatenströme, die an eine einzige IP-Adresse eines Servers gerichtet sind, auf einen Pool von Servern verteilt. Die Verteilung erfolgt session-orientiert durch einen sogenannten LSNAT-Router mit Hilfe von Echtzeit-Lastverteilungsalgorithmen, wie beispielsweise dem sogenannten Least Load First Algorithmus, oder dem sogenannten Weighted Least Traffic First Algorithmus. Ein Netzadressenübersetzer NAT übersetzt dazu die IP Adressen der Datagramme, also der Datenpakete mit Adressen- und Wegeinformationen.

Zur Verwendung dieses Lastverteilungsverfahrens sind spezielle Router, sogenannte LSNAT-Router, im Kommunikationsnetz notwendig, wodurch zusätzliche Kosten entstehen. Weiterhin muß sichergestellt werden, daß alle Datenpakete einer Session durch den gleichen LSNAT-Router weitergeleitet werden, was je nach vorhandener Netzarchitektur einen erheblichen Aufwand bedeuten kann. Schließlich kann der eingesetzte Lastverteilungsalgorithmus, insbesondere in Systemen mit einer großen Anzahl an Servern, einen Engpaß des Systems darstellen.

Eine Alternative ist die Verwendung symbolischer Adressenbezeichner für Anwendungsserver, beispielsweise "www.anwendungsserver.de", anstelle der IP-Adresse, beispielsweise "3.1.226.64". Diese symbolischen Adressenbezeichner müssen vor dem Aufruf des Datendienstes durch eine sogenannte DNS-Serverabfrage aufgelöst werden. Unter Berücksichtigung der Lastsituation der Server des Kommunikationssystems kann der DNS-Server bei der Auflösung des symbolischen Adressenbezeichners eine Lastverteilung vornehmen. Allerdings wird bei diesem Ansatz der Systemengpaß nicht beseitigt, sondern nur vom Anwendungsserver auf den DNS-Server verschoben. Das Endgerät benötigt auch in diesem Fall zur DNS-Serverabfrage dessen IP-Adresse. Bei hoher Nachfrage nach Datendiensten steigt die Anzahl der DNS-Serverabfragen, so daß der DNS-Server überlastet werden kann.

Wie voranstehend erläutert, erfordert die Kapazitätserweiterung serverorientierter Datendienste das Hinzufügen zusätzlicher Server. Aufgrund der dadurch zwangsläufig eingeführten neuen IP-Adressen dieser Server ist eine Maßnahme zur Lastverteilung erforderlich. Bekannte Verfahren zur Lastverteilung erfordern einen zusätzlichen Aufwand durch den Diensteanbieter oder den Netzbetreiber, wie den Einsatz spezieller Router auf der Netzseite, oder die Modifikation der Endgerätehardware durch den Hersteller bzw. die Modifikation der Endgerätesoftware durch den Benutzer.

### Aufgabe der Erfindung

Demgemäß liegt der Erfindung die Aufgabe zugrunde, ein Verfahren zur Zuordnung einer Serveradresse, eine Kommunikationsvorrichtung mit einer Zuordnungseinrichtung, sowie ein Kommunikationssystem mit Servern und Kommunikationsendgeräten vorzustellen, so daß hinsichtlich der Server eine einfache Skalierbarkeit des Kommunikationssystems gewährleistet ist.

Die Aufgabe wird erfindungsgemäß gelöst durch die Lehre der unabhängigen Patentansprüche 1, 12, 20 und 22.

Zur Zuordnung einer Serveradresse zu einer Kommunikationsvorrichtung wird aus einer Menge von k>1 Adressenelementen ein Adressenelement ausgewählt und in der Kommunikationsvorrichtung, beispielsweise einem Kommunikationsendgerät, gespeichert. Dieses Adressenelement steht als Serveradresse zur direkten Adressierung eines Datendienstaufrufs des Servers zur Verfügung. Vorteilhafterweise ist keine zusätzliche DNS-Serverabfrage notwendig, so daß auf einen DNS-Server im Kommunikationssystem verzichtet werden kann. Außerdem werden so Ressourcen zur Datenübertragung gespart, was insbesondere in einem zellularen Mobilfunksystem, welches mindestens eine Basisstation, welche Datenpakete senden und empfangen kann, und welche mittels eines Paketdatennetzes mit den Servern des Systems verbunden ist, hinsichtlich der Bandbreite der Luftschnittstelle als knapper Ressource ein Vorteil ist. Weiterhin wirkt sich die direkte Verfügbarkeit der Adresse des Anwendungsservers im Kommunikationsendgerät positiv auf die Performance des gesamten Kommunikationssystems aus, insbesondere im Hinblick auf geringe Antwortzeiten nach Diensteanforderungen.

Grundsätzlich sollte in einem Paketdatennetz eine Adresse eines Servers nicht doppelt an verschiedene Server vergeben werden. Allerdings ist es möglich, einem einzigen Server eine Vielzahl unterschiedlicher IP-Adressen zuzuweisen. Gemäß der vorliegenden Erfindung enthält die Menge der k Adressenelemente, aus der ein Adressenelement ausgewählt wird, eine Anzahl n mit 1<n<=k von verschiedenen Adressenbezeichnern, welche eine Anzahl von m mit 0<m<=n Servern bezeichnen. Dies erlaubt eine einfache und flexible serverseitige Skalierbarkeit des Kommunikationssystems, da mit Hilfe jedes Adressenbezeichners, der als Adressenelement ausgewählt werden kann, ein Server gültig bezeichnet ist. Jede Ausbaustufe des Systems, von einem einzigen Server bis zu einer Serveranzahl, die der Anzahl n der verschiedenen Adressenbezeichner aus der Menge k entspricht, wird ohne erforderliche Zusatzmaßnahmen vom Kommunikationsendgerät unterstützt.

Das erfindungsgemäße Verfahren erlaubt, wenn es für eine Vielzahl der Kommunikationsendgeräte eines Kommunikationssystems angewandt wird, durch die jeweilige Auswahl eines Adressenelementes, respektive eines Adressenbezeichners eines Servers, eine Lastverteilung hinsichtlich der serverorientierten Datendienste des Systems, wenn mehr als ein Server durch die n Adressenbezeichner bezeichnet wird. Von dem verwendeten Auswahlverfahren, das vorteilhafterweise beispielsweise durch den Netzbetreiber oder Datendienstanbieter vorgegeben werden kann, hängt die Art der Lastverteilung ab. Das erfindungsgemäße Verfahren kann daher für unterschiedliche Lastprofilanforderungen eingesetzt werden, da kein festes Auswahlverfahren vorgeschrieben ist.

Die Menge der k Adressenelemente kann auch gleiche Adressenbezeichner mehrfach enthalten. Dies erlaubt vorteilhafterweise eine Gewichtung der Adressenbezeichner und unterstützt so die Lastverteilung. Ein Adressenbezeichner, der einen Server mit im Vergleich zu andern Servern des Systems höherer Prozessorleistung bezeichnet, kann mehrfach in der Adressenelementemenge enthalten sein. Dieser Adressenbezeichner hat dann - in Abhängigkeit vom verwendeten Auswahlverfahren - eine höhere Auswahlwahrscheinlichkeit als ein Adressenbezeichner, welcher nur einmal in der Adressenelementemenge enthalten ist. Durch die Vorgabe einer entsprechenden Gewichtung der Adressenbezeichner kann der Netzbetreiber oder Datendienstanbieter die Lastverteilung beeinflussen.

Die Auswahl des Adressenbezeichners erfolgt transparent für den Benutzer des Kommunikationsendgerätes, mit anderen Worten, die Auswahl wird vom Benutzer nicht bemerkt. Dies ist für den Benutzer angenehm, da er deshalb keine Konfigurationsarbeiten vornehmen muß.

Das grundlegende erfindungsgemäße Verfahren ist flexibel einsetzbar. Es kann sowohl im Kommunikationsendgerät, welches einen Speicher für die k Adressenelemente, eine Auswahleinheit zur Auswahl eines Adressenbezeichners und einen Speicher für den ausgewählten Adressenbezeicher enthält, beispielsweise bei jeder Anmeldung im Kommunikationssystem, oder anders gesagt, bei jedem Einschalten des Gerätes, oder bei jeder Anforderung eins Datendienstes durchgeführt werden. Auch ein Einsatz während der Endgeräteproduktion ist denkbar, so daß der ausgewählte Adressenbezeichner bei der Herstellung im Endgerät gespeichert wird.

Vorteilhafterweise kann die Erfindung als Computerprogramm realisiert werden. Dies erlaubt die Verwendung der Erfindung in Kommunikationsendgeräten, ohne daß Änderungen an der Hardware erforderlich sind. Weiterhin erlaubt das Computerprogramm im Rahmen von Herstellung und Entwicklung die einfache und kostengünstige Durchführung von Tests und Simulationen.

Weitere vorteilhafte Ausführungsformen und Verbesserungen der Erfindung sind in den abhängigen Ansprüchen aufgeführt.

In einer vorteilhaften Ausführungsform umfaßt der Schritt des Auswählens zusätzlich das Auslesen eines zweiten Adressenbezeichners und das Zusammensetzen des ersten und zweiten Adressenbezeichners zum ausgewählten Adressenbezeichner. Somit besteht ein vollständiger Adressenbezeichner, der einen Server bezeichnet, aus einem festen Anteil, das heißt dem zweiten Adressenbezeichner, der fest in einem Speicher vorgegeben ist, und einem variablen Anteil, das heißt dem ersten Adressenbezeichner, der aus der Menge der k Adressenelemente ausgewählt wird. Vorteilhafterweise wird so der im Kommunikationsendgerät notwendige Speicherbedarf für Adressenbezeichner minimiert.

In einer weiteren vorteilhaften Ausführungsform handelt es sich bei der Serveradresse um eine IP-Adresse. Dies erlaubt die Verwendung von kommerziell verbreiteten Datenkommunikationsprotokollen und Routern im Kommunikationssystem, ebenso wie die einfache Einbindung von Anwendungsservern des Internet.

In einer weiteren vorteilhaften Ausführungsform ist der erste Adressenbezeichner ein Host Bezeichner, und der zweite Adressenbezeichner ein Netzwerk Bezeichner der IP-Adresse des Servers. Eine derartige Verwendung der Struktur des sogenannten IPv4-Adressenformates erlaubt eine einfache Aufteilung der IP-Adresse in einen festen und einen variablen Anteil und vereinfacht somit die Verwaltung der IP-Adressen der Server des Kommunikationsnetzes durch den entsprechenden Betreiber.

Insbesondere die Verwendung eines Klasse C Formates einer IPv4 Adresse ist vorteilhaft, da die Anzahl der zur Verfügung stehenden Host Bezeichnern in diesem Adressenformat 256 beträgt, was die Anforderungen der meisten Datendiensteanbieter oder Netzbetreiber hinsichtlich der Skalierbarkeit der Server erfüllt.

Eine vorteilhafte Ausgestaltung der Erfindung bietet die Auswahl des ersten Adressenbezeichners mit Hilfe einer Zufallsfunktion. Dies erlaubt für die Vielzahl der zum Kommunikationssystem gehörenden Kommunikationsendgeräte die einfache Realisierung einer serverseitigen Lastverteilung von Datendiensteanforderungen, welche durch die Zufallsauswahl statistisch über alle auftretenden Adressenelemente k, und somit über alle ausgewählten Adressenbezeichner der Server gleichverteilt sind.

Eine weitere vorteilhafte Ausgestaltung der Erfindung nutzt einen in der Kommunikationsvorrichtung vorliegenden, individuellen numerischen Bezeichner. Die Auswahl erfolgt durch eine einfache Modulo-Rechnung. Das sich aus diesem Auswahlverfahren für die Vielzahl der im Kommunikationssystem enthaltenden Endgeräte ergebende Lastprofil, oder mit anderen Worten, die Lastverteilung auf die Server, hängt von den ausgegebenen Bezeichnern ab. Insbesondere wenn der verwendete individuelle Bezeichner auf einer sogenannten SIM-Karte des Endgerätes gespeichert ist, kann der Netzbetreiber oder Diensteanbieter unabhängig vom Endgerätehersteller auf einfache Art und Weise durch die Auswahl der an die Benutzer ausgegebenen SIM-Karten die Lastverteilung beeinflussen.

Weiterhin vorteilhaft ist es, wenn der ausgewählte gespeicherte Adressenbezeichner im alphanumerischen Klartext vorliegt, beispielsweise durch die Verwendung der sogenannten symbolischen Notation der IP-Adresse des Servers. In diesem Fall ist zwar eine DNS-Serverabfrage zur Adressierung des Servers erforderlich, allerdings ist die Skalierung der Server des Kommunikationssystems erheblich flexibler, da die IP-Adressen der Server für das Endgerät transparent sind und somit durch einfache Änderungen entsprechender Zuordnungstabellen des DNS-Servers geändert werden können.

Weiterhin vorteilhaft ist es, daß Adressenelemente aus der Menge der k Elemente beziehungsweise der zweite, also feste Adressenbezeichner, aktualisiert werden können. Dies befreit den Netzbetreiber oder Diensteanbieter von möglichen Einschränkungen im Hinblick auf die Änderungen der Serverkonfigurationen und stellt die einfache Erweiterbarkeit des Kommunikationssystems sicher.

Insbesondere vorteilhaft ist es, daß die Aktualisierung, beispielsweise durch das Endgerät oder den Benutzer, von einem Adressenserver angefordert werden kann. Das Endgerät kann so im Falle eines Fehlers ungültige Adressenelemente bzw. Adressenbezeichner korrigieren, oder der Benutzer kann, beispielsweise nach einer längeren Nichtbenutzungszeit des Endgerätes die aktuellen Daten anfordern.

Schließlich ist die Speicherung des Computerprogramms auf einem computerlesbaren Medium vorteilhaft, da so in einfacher Art und Weise der Einsatz der Erfindung auf verschiedenen Geräten möglich ist, wie beispielsweise auf Testsystemen, Simulationssystemen oder Maschinen zur Endgerätefertigung.

Nachstehend wird die Erfindung unter Bezugnahme auf ihre Ausführungsformen und unter Bezugnahme auf die beiliegenden Figuren beschrieben.

### Kurzbeschreibung der Figuren

Folgende Figuren zeigen:
- Fig. 1: eine Darstellung eines Kommunikationssystems, welches die Datendienstanforderung durch Kommunikationsendgeräte erlaubt,
- Fig. 2: verschiedene Serverkonfigurationen mit zugeordneten Serveradressen eines Kommunikationssystems,
- Fig. 3: ein Ablaufdiagramm einer beispielhaften Auswahl eines Adressenbezeichners eines Servers,
- Fig. 4: ein Ablaufdiagramm eines weiteren Beispiels einer Auswahl eines Adressenbezeichners eines Servers,
- Fig. 5: ein Ablaufdiagramm eines weiteren Beispiels einer Auswahl eines Adressenbezeichners eines Servers,
- Fig. 6: in vereinfachter Darstellung ein Blockdiagramm einer Kommunikationsvorrichtung, welche eine Zuordnung einer Serveradresse erlaubt, und
- Fig. 7: in vereinfachter Darstellung ein weiteres Blockdiagramm einer Kommunikationsvorrichtung, welche eine Zuordnung einer Serveradresse erlaubt.

Im folgenden wird die Erfindung anhand der Figuren und anhand verschiedener Ausführungsformen näher erläutert.

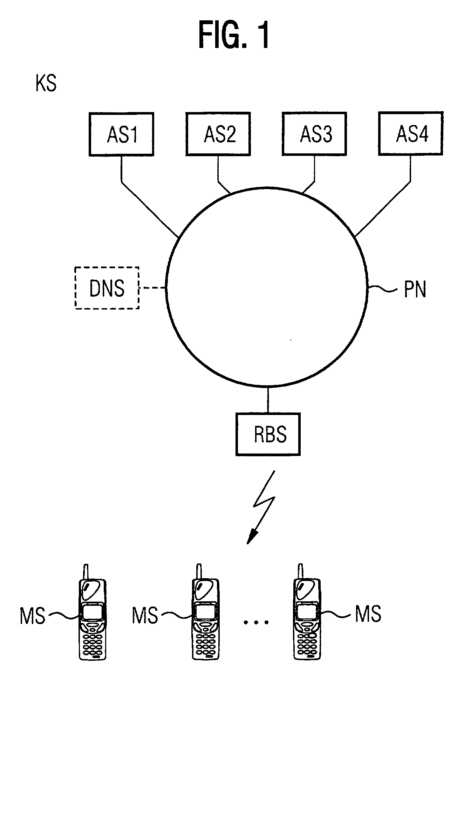

Fig. 1 zeigt ein Kommunikationssystem KS mit Servern AS1, AS2, AS3, AS4, einer Basisstation RBS, einem Paketdatennetz PN, sowie mehreren Kommunikationsendgeräten MS. Die Server AS1, AS2, AS3, AS4 und die Basisstation RBS sind jeweils mit dem Paketdatennetz PN verbunden. Die Server AS1, AS2, AS3, AS4, welche durch sogenannte IP-Adressen adressiert werden, bieten alle einen gleichen Datendienst an, beispielsweise Börsenkurse, Nachrichten oder Verkehrsinformationen. Die Kommunikationsendgeräte MS sind jeweils geeignet, diesen entsprechenden Datendienst von einem der Server AS1, AS2, AS3, AS4 anzufordern. Ein Kommunikationsendgerät MS sendet diese Datendienstanforderung mittels ein oder mehrerer Datenpakete an eine ihm zugeordnete Serveradresse eines der Server AS1, AS2, AS3, AS4. Die erforderliche paketorientierte Datenkommunikation erfolgt mit Hilfe der Basisstation RBS und des Paketdatennetzes PN. Die erfindungsgemäße Zuordnung der Serveradresse zum Kommunikationsendgerät wird im folgenden ausführlich erläutert.

Das Kommunikationssystem kann zusätzlich einen sogenannten Domain Name Server DNS enthalten, welcher mit dem Paketdatennetz verbunden ist. Da das Vorsehen eines DNS Servers optional ist, wird dieser durch eine punktierte Linie dargestellt. Der Domain Name Server ist beispielsweise dann erforderlich, wenn den Kommunikationsendgeräten MS symbolische Serveradressen, beispielsweise "news.ericsson.se" anstelle von IP-Adressen, beispielsweise "192.50.123.15" zugeordnet sind. Die zur Übertragung von Datenpaketen an den entsprechenden Server AS1, AS2, AS3, AS4 notwendige Auflösung der symbolischen Adresse des Servers in seine IP-Adresse erfolgt dann mit Hilfe einer Abfrage des Domain Name Servers. Diese Abfrage wird vom Kommunikationsendgerät, oder alternativ, von der Basisstation RBS, durchgeführt.

Bei dem Kommunikationssystem kann es sich beispielsweise um ein General Packet Radio System GPRS, ein Packet Personal Digital Cellular PPDC System, oder um ein Universal Mobile Telecommunication System UMTS handeln. Hinsichtlich der Anzahl der Basisstationen RBS des erfindungsgemäßen Kommunikationssystems gibt es keine Beschränkungen. Obwohl in Fig. 1 zum besseren Verständnis nur eine Basisstation RBS gezeigt ist, enthalten beispielsweise die angegebenen Systeme üblicherweise eine Vielzahl von Basisstationen RBS. Auch die Verwendung einer Anzahl von vier Servern AS1, AS2, AS3, AS4 in Fig. 1 stellt, wie noch gezeigt wird, lediglich eine von vielen serverseitigen Konfigurationsmöglichkeiten des Kommunikationssystems dar.

Wenn bei steigender Nachfrage nach dem angebotenen Datendienst die Kapazitätsgrenze der angeschlossenen Server erreicht wird, kann der Datendienstanbieter oder Netzbetreiber einen Engpaß durch die Einrichtung eines oder mehrerer zusätzlicher Server für diesen Datendienst vermeiden. Um die Skalierbarkeit der Server des Kommunikationssystems sicherzustellen, ist ein Adreßraum, oder mit anderen Worten, eine Anzahl von Serveradressen, für die Server des Systems, die den Datendienst anbieten, reserviert. Diese Adressen sind auf die in der jeweils aktuellen Konfiguration des Systems eingerichteten Server verteilt. Das bedeutet, daß mit jeder Adresse des Adreßraums unabhängig von der aktuellen Serverkonfiguration ein Server adressiert werden kann, der den Datendienst anbietet. Dies ist möglich, da ein einzelner Server mehrere IP-Adressen haben kann. Um die Eindeutigkeit der Adressierung sicherzustellen, sollte aber andererseits eine einzelne IP-Adresse nicht für mehrere Server verwendet werden.

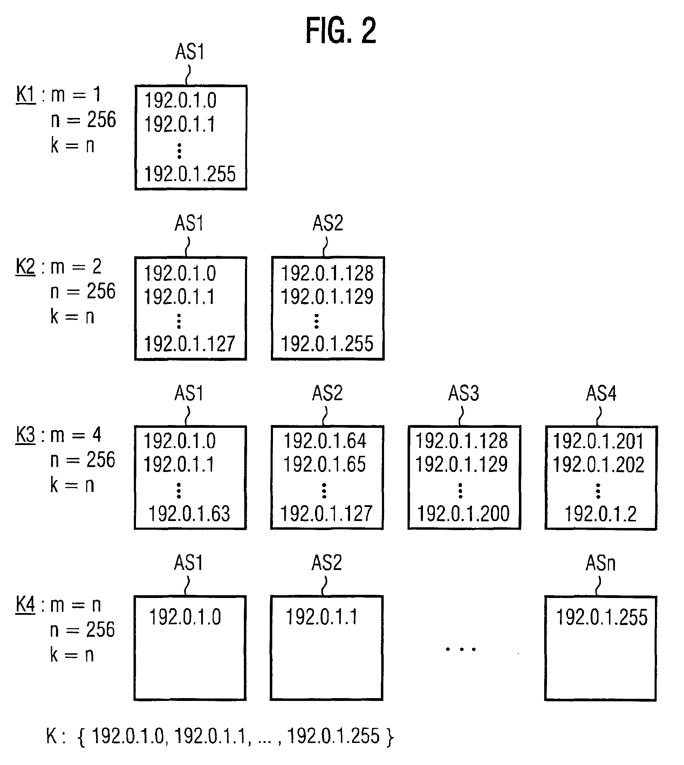

Fig. 2 zeigt als Beispiel verschiedene Serverkonfigurationen mit jeweils einer zulässigen Verteilung der Serveradressen auf die in der jeweiligen Konfiguration vorhandenen Server. Der Parameter m gibt die Anzahl der Server an, welche einen Datendienst anbieten. Die Anzahl m ist abhängig von der jeweiligen Konfiguration. Der Parameter n gibt die Anzahl der verschiedenen Adressenbezeichner, oder mit anderen Worten, der verschiedenen Serveradressen an, die für die Server dieses Datendienstes reserviert sind. Im angegebenen Beispiel sind 256 verschiedene Adressenbezeichner für Server, die den Datendienst anbieten, reserviert. Bei den Adressenbezeichnern handelt es sich im angegebenen Beispiel um vollständige IP-Adressen. Der Parameter k bezeichnet eine Menge von Adressenelementen, aus der unabhängig von der jeweiligen Konfiguration der Server eine Serveradresse ausgewählt werden kann, die zur Anforderung des Datendienstes durch ein Kommunikationsendgerät benötigt wird. Im dargestellten Beispiel ist jeder der reservierten verschiedenen Adressenbezeichner einmal in der Menge enthalten, so daß k=n gilt. Die Menge k enthält daher 256 verschiedene IP-Adressen, nämlich den Adreßraum von 192.0.1.0 bis 192.0.1.255.

In Fig. 2 ist in einer ersten Konfiguration K1 ein einziger Server AS 1 im Kommunikationssystem für den Datendienst vorgesehen, das heißt m=1. Dieser Server kann durch alle der reservierten IP-Adressen erreicht werden, also durch alle Adressen von 192.0.1.0 bis 192.0.1.255. In einer zweiten Konfiguration K2 bieten zwei Server AS1, AS2 den Datendienst an, d.h. m=2. Die vorhandenen 256 verschiedenen IP-Adressen verteilen sich jetzt auf die beiden Server AS1, AS2. AS1 hat die Adressen von 192.0.1.0 bis 192.0.1.127, während AS2 über die Adressen 192.0.1.128 bis 192.0.1.255 verfügt.

Obwohl in der angegebenen Beispielskonfiguration K2 die reservierten Adressen zu gleichen Teilen auf die vorhandenen Server verteilt sind, ist generell die Verteilung der IP-Adressen auf die vorhandenen Server einer Konfiguration beliebig. Zur Erreichbarkeit eines Servers muß lediglich sichergestellt sein, daß er über eine IP-Adresse verfügt. Solange die Anzahl der eingesetzten Server kleiner ist als die Anzahl der verfügbaren Serveradressen, also m<n, kann der Datendienstanbieter bzw. Netzbetreiber die Verteilung der IP Adressen an der Verarbeitungskapazität der jeweiligen Server orientieren, so daß ein leistungsfähigerer Server über mehr Adressen verfügt als ein weniger leistungsfähigerer Server. Wenn die Auswahl der Serveradressen zur Anforderung des Datendienstes durch die jeweiligen Endgeräte einer geeigneten Verteilung, beispielsweise einer Gleichverteilung, unterliegt, wird so eine an den Serverkapazitäten orientierte Lastverteilung erreicht.

Die Möglichkeit einer ungleichen Verteilung der reservierten Adressenbezeichner auf die vorhandenen Server zeigt das Konfigurationsbeispiel K3 mit vier Servern AS1, AS2, AS3, AS4, also m=4. Während in K2 die 256 IP-Adressen zu gleichen Teilen auf die beiden Server AS1, AS2 verteilt sind, verfügt in K3 der Server AS1 über 64 der 256 reservierten Adressen, nämlich 192.0.1.0 bis 192.0.1.63, der Server AS2 über 64 Adressen mit 192.0.1.64 bis 192.0.1.127 und der Server AS3 mit 192.0.1.128 bis 192.0.1.200 über 73 Adressen, während der Server AS4 mit 192.0.1.201 bis 192.0.1.255 über 55 Adressen verfügt. Bei angenommener Gleichverteilung der zugeordneten Serveradressen auf die Kommunikationsendgeräte des Systems, sowie bei unterstellter gleicher Nachfrage der Benutzer nach dem Datendienst, wird so der Server AS3 in 73 von 256 Fällen angefragt, während der Server AS4 nur in 55 von 256 Fällen eine Datendienstanforderung erhält.

Die Konfiguration K4 zeigt die maximale Ausbaustufe für das angegebene Beispiel. Hier sind im Kommunikationssystem 256 Server AS 1 bis ASn eingesetzt, d.h. m=256. Jeder Server verfügt über genau eine IP-Adresse, also AS1 über 192.0.1.0, AS2 über 192.0.1.1, bis zu ASn mit 192.0.1.255. Die maximal mögliche Konfiguration ist abhängig von der Anzahl n der reservierten verschiedenen IP-Adressen.

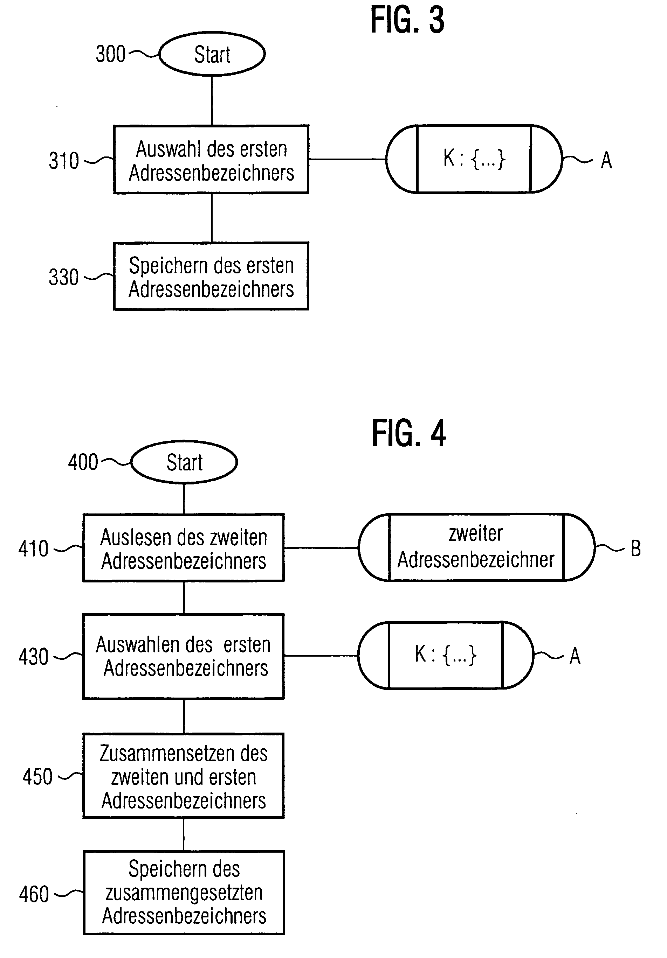

Fig. 3 zeigt den Ablauf der Zuordnung einer Serveradresse zu einer Kommunikationsvorrichtung. Die Kommunikationsvorrichtung kann ein Kommunikationsendgerät, wie beispielsweise ein Mobiltelefon, oder eine sogenannte SIM-Karte für ein kartenbasiertes Kommunikationsendgerät sein. Die Zuordnung kann beispielsweise durchgeführt werden, oder mit anderen Worten gestartet 300 werden, bei der Anmeldung des Kommunikationsendgerätes im Kommunikationssystem, jeweils vor einer Datendienstanforderung oder im Rahmen der Produktion des Kommunikationsendgerätes oder der SIM-Karte.

Zur Zuordnung wird ein Adressenbezeichner aus der Menge der k Adressenelemente A ausgewählt 310 und im nächsten Schritt in der Kommunikationsvorrichtung abgespeichert 330. Die Auswahl kann beispielsweise mit Hilfe einer Zufallsfunktion oder gemäß von Auswahlregeln, welche durch den Netzbetreiber oder Dienstanbieter vorgegeben werden, erfolgen. Geeignete Zufallsfunktionen sind dem Fachmann bekannt. Ein Beispiel für eine Auswahlregel ist die stückzahlbasierte Auswahl im Rahmen der Kommunikationsendgeräte- bzw. SIM-Kartenproduktion. Dabei kann beispielsweise für die jeweils ersten 1000 hergestellten Einheiten das erste Mengenelement der k Adressenelemente ausgewählt werden, für die zweiten 1000 Einheiten das zweite Adressenelement, usw. Die Speicherung des ausgewählten Adressenbezeichners kann, beispielsweise während der Produktion, als Festwertspeicherung in einem ROM des Kommunikationsendgerätes oder auf der SIM-Karte erfolgen. Eine weitere Möglichkeit ist die Speicherung als Zwischenspeicherung in einem Direktzugriffsspeicher, d.h. einem sogenannten RAM, des Endgerätes oder der SIM-Karte. Die Auswahl des Adressenbezeichners findet transparent für den Benutzer, oder mit anderen Worten unbemerkt vom Benutzer, der Kommunikationsendgerätevorrichtung statt.

Bei den k Adressenelementen der Menge, aus welcher der Adressenbezeichner ausgewählt wird, handelt es sich in einer erfindungsgemäßen Ausführung um IP-Adressen. Eine bekannte IP-Adressenstruktur ist die 32 bit IPv4 Adressenstruktur. Eine solche IP-Adresse hat vier Oktets, welche jeweils eine nicht negative, ganze Zahl darstellen. Jedes Oktet wird von anderen Oktets durch einen Dezimalpunkt abgegrenzt (z. B. 193.154.180.123). Für das IPv4 Format gibt es verschiedene Adressenklassen. Eine Klasse A Adresse enthält in ihrem ersten Oktet einen Netzbezeichner und in den verbleibenden 3 Oktets einen Hostbezeichner, so daß maximal 224 Hosts durch eine Klasse A Adresse adressiert werden können. Eine Klasse B Adresse belegt die ersten 2 Oktets mit dem Netzbezeichner und die zwei weiteren Oktets mit dem Hostbezeichner, so daß ca. 64.000 Hosts unterschieden werden können. Eine Klasse C Adresse bezeichnet schließlich mit den ersten 3 Oktets ein Netz und mit einem weiteren Oktet einen Host. Daher kann ein einzelnes Klasse C Netz über 256 Hostadressen verfügen. Alternative Formate ergeben sich durch die Verwendung sogenannter, dem Fachmann bekannter Subnetze. Weiterhin können auch andere IP-Adressenstrukturen, wie zum Beispiel IPv6 Adressen verwendet werden.

Auch die Verwendung von sogenannten symbolischen Adressen (z.B. www.ericsson.se) anstelle von IP-Adressen zur Auswahl einer Serveradresse ist möglich. Dann liegt der Adressenbezeichner im alphanumerischen Klartext vor. Die symbolische Adresse wird zur Adressierung des entsprechenden Servers, und somit zur Anforderung eines Datendienstes des Servers, durch eine DNS-Serverabfrage aufgelöst.

Weiterhin können die Adressenelemente unvollständige Serveradressen repräsentieren. Damit kann es sich bei der ausgewählten und der Kommunikationsvorrichtung zugeordneten und in diesem Fall unvollständigen Adresse beispielsweise um den Netzbezeichner einer IP-Adresse oder einen Teil einer symbolischen Adresse handeln. Zur Anforderung eines Datendienstes kann diese unvollständige Adresse mit Hilfe einer DNS-Serverabfrage zu einer vollständigen Adresse ergänzt beziehungsweise aufgelöst werden. Dazu wird die unvollständige Adresse an den DNS-Server gesendet, der diese, beispielsweise in Abhängigkeit von der aktuellen Lastsituation der Server, ergänzt und zurücksendet.

Die Menge der k Adressenelemente, aus denen ein Adressenbezeichner ausgewählt wird, kann mehrfach gleiche Adressenelemente enthalten, so daß der Wert k größer als n ist, d.h. größer als die Anzahl der verschiedenen reservierten Adressenbezeichner. So kann in Bezug auf die Auswahl bei der Vorgabe der Menge der k Adressenelemente, beispielsweise durch den Netzbetreiber oder Datendienstanbieter, eine Gewichtung der n Adressenbezeichner vorgenommen werden. Wenn beispielsweise die Auswahl der Adressenelemente für die Kommunikationsendgeräte des Kommunikationssystems insgesamt einer Gleichverteilung unterliegt, sind Adressenbezeichner, die mehrfach auftreten, stärker gewichtet als Adressenbezeichner, die einmal in der Menge enthalten sind. Mit anderen Worten, in Abhängigkeit vom verwendeten Auswahlverfahren werden Adressenbezeichner, die mehrfach in der Menge der Adressenelemente vorhanden sind, häufiger ausgewählt als Adressenbezeichner, die einfach vorhanden sind. Durch eine entsprechende Vorgabe der Menge der k Adressenelemente kann daher die Lastverteilung der Server des Kommunikationssystems beeinflusst werden.

Fig. 4 zeigt eine alternative Ausgestaltung der erfindungsgemäßen Zuordnung einer Serveradresse zu einer Kommunikationsvorrichtung. Nach dem Start 400 des Verfahrens wird ein zweiter Adressenbezeichner aus einem Speicher B, beispielsweise einem ROM Speicher, ausgelesen 410. Dieser zweite Adressenbezeichner ist, beispielsweise durch den Netzbetreiber oder Datendienstanbieter, vorgegeben. Anschließend wird ein erster Adressenbezeichner aus einer Menge von k Adressenelementen A, welche beispielsweise in einem Speicher der Kommunikationsendgerätevorrichtung vorliegt, ausgewählt 430. Dann werden der erste und der zweite Adressenbezeichner zusammengesetzt 450. Der zusammengesetzte Adressenbezeichner bildet den ausgewählten Adressenbezeichner und bezeichnet eine Serveradresse. Er wird in der Kommunikationsvorrichtung abgespeichert 460.

Bei dem zweiten Adressenbezeichner kann es sich beispielsweise um den Netzbezeichner einer IPv4 Adresse handeln, z.B. "192.0.1.". Alle Server des Kommunikationssystems, die einen Datendienst anbieten, gehören zu dem so bezeichneten Netz. Die Menge der k Adressenelemente enthält eine Anzahl an Hostbezeichnern, z.B. k : {"0", "1", ..., "255"}, durch welche die Server innerhalb dieses Netzes identifiziert werden. Aus dieser Menge wird ein erster Adressenbezeichner, beispielsweise mit Hilfe einer Zufallsfunktion, ausgewählt, z.B. "15". Die zusammengesetzten Adressenbezeichner werden gespeichert und bilden den ausgewählten Adressenbezeichner. Dies führt im angegeben Beispiel zu "192.0.1." + "15" = "192.0.1.15".

Ein weiteres Beispiel ist die Zuordnung einer symbolischen Adresse. Die Menge der k Adressenelemente enthält einen variablen Anteil von symbolischen Serveradressen, z.B. k : {"news1", "news2", "more-news", "hot-news"}, aus der ein erster Adressenbezeichner ausgewählt wird, z.B. "hot-news". Der feste Anteil der symbolischen Serveradressen, z.B. ".ericsson.se", wird aus einem Speicher ausgelesen und bildet den zweiten Adressenbezeichner. Variabler und fester Anteil der symbolischen Serveradresse werden zusammengesetzt. Im Beispiel führt dies zu "hot-news" +".ericsson.se" = "hot-news.ericsson.se". Die beiden Anteile bilden damit zusammen den ausgewählten Adressenbezeichner und werden als solcher gespeichert.

Eine weitere Ausgestaltung der vorliegenden Erfindung (ohne Figur) betrifft die Aktualisierung, mit anderen Worten, die Modifikation der in der Kommunikationsvorrichtung abgespeicherten Daten, die zur Auswahl einer Serveradresse verwendet werden. Die Aktualisierung erfolgt vorzugsweise durch den Empfang der jeweiligen Daten und entsprechendes Abspeichern dieser Daten in der Kommunikationsvorrichtung, mit anderen Worten, durch Ändern oder Ergänzen dieser Daten. Die Aktualisierung kann beispielsweise von einem Adressenserver DNS des Kommunikationssystems angefordert werden. Sie kann unter anderem durchgeführt werden nach Auftreten eines Fehlers, oder mit anderen Worten, falls eine Datendienstanforderung mittels einer bereits ausgewählten Serveradresse fehlschlägt, auf Veranlassung des Netzbetreibers oder Datendienstanbieters, oder auf Anforderung durch einen Benutzer, beispielsweise durch die Eingabe einer Modifikationsanforderung in das Endgerät durch Drücken einer entsprechend belegten Taste. Auch eine automatische Modifikation, beispielsweise in regelmäßigen Zeitabständen, kann durchgeführt werden. Optional kann unmittelbar nach jeder Aktualisierung der in der Kommunikationsvorrichtung vorliegenden Daten die Zuordnung einer Serveradresse zur Kommunikationsvorrichtung vorgenommen werden.

Die Modifikation kann beispielsweise über eine Luftschnittstelle des Kommunikationssystems mit Hilfe des sogenannten Short Message Service (SMS), durch die Verwendung einer sogenannten MAP (Mobile Application Part ) Message, oder unter Verwendung eines proprietären Protokolls erfolgen.

Aktualisiert werden können ein Adressenelement oder mehrere Adressenelemente der Menge der k Adressenelemente, aus der ein erster Adressenbezeichner ausgewählt wird, oder die gesamte Menge. Wenn die Serveradresse unter Verwendung eines variablen und eines festen Adressenteils ausgewählt wird, kann alternativ oder zusätzlich der abgespeicherte zweite Adressenbezeichner, d. h. der feste Adressenanteil, modifiziert werden. So ist beispielsweise durch die Aktualisierung des Netzes der Server des Kommunikationssystems, mit anderen Worten, durch die Änderung des als festen Adressenteils gespeicherten Netzbezeichners, unter Beibehaltung aller Hostbezeichner eine effiziente Umkonfiguration der Server möglich.

Eine weitere Ausgestaltung der Erfindung verwendet zur Zuordnung der Serveradresse einen in der Kommunikationsvorrichtung abgespeicherten Bezeichner. Dies kann beispielsweise eine laufende Registriernummer der jeweiligen Kommunikationsvorrichtung sein. Eine weitere Möglichkeit ist die Verwendung der sogenannten MSIN (Mobile Subscriber Identity Number). Die MSIN ist Bestandteil der sogenannten IMSI (International Mobile Station Identity), welche durch die ITU-T Empfehlung E.212 standardisiert ist, und welche üblicherweise in Endgeräten oder SIM-Karten von Mobilfunksystemen enthalten ist. Die MSIN ist ein, beispielsweise in Japan 6-stelliger, numerischer Wert und dient zur eindeutigen Identifizierung eines Kommunikationsendgerätes in einem Mobilfunksystem.

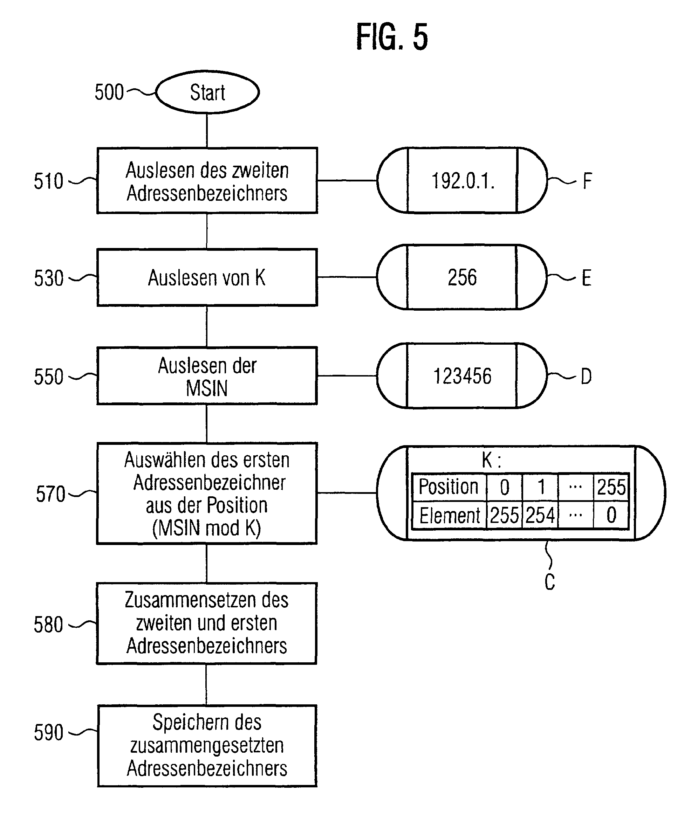

Fig. 5 zeigt einen möglichen Ablauf der Serveradressenzuordnung unter Verwendung der MSIN. Nach dem Start 500 des Verfahrens wird ein zweiter Adressenbezeichner aus einem Speicher F ausgelesen 510, beispielsweise "192.0.1.". Aus einem weiteren Speicher E wird die Anzahl k der in einem Speicher C gespeicherten und die Server des Kommunikationssystems adressierenden Adressenelemente ausgelesen 530, beispielsweise "256". Anschließend wird die MSIN aus einem Speicher D ausgelesen 550, beispielsweise "123456". Danach wird ein erster Adressenbezeichner aus der gespeicherten Menge von k Adressenelementen ausgewählt.

Im Speicher C ist die Position jedes Adressenelementes der Menge eindeutig durch eine laufende Nummer bestimmt. Das erste Adressenelement, beispielsweise "255", hat die Positionsnummer "0", das letzte Adressenelement, beispielsweise "0", hat die Positionsnummer der um eins verminderten Anzahl k, beispielsweise "255". Die Auswahl des ersten Adressenbezeichners erfolgt mit Hilfe der Berechnung des Rest der Division der MSIN durch die Anzahl k der Adressenelemente der Menge, mit anderen Worten durch die Berechnung von MSIN mod k, beispielsweise 123456 mod 255=36. Das Ergebnis dieser Berechnung liefert die Positionsnummer eines Adressenelementes, welches dann mittels dieser Positionsnummer aus dem Speicher C ausgelesen wird, beispielsweise "219" aus Position "36". Anschließend werden der erste und zweite Adressenbezeichner zusammengesetzt 580, beispielsweise "192.0.1." + "219" = "192.0.1.219", und als ausgewählter Adressenbezeichner in der Kommunikationsvorrichtung gespeichert 590 und ihr damit zugeordnet.

In einer speziellen Ausführungsform entspricht der Speicher E für die Anzahl k der Adressenelemente dem Speicher, der die größte Positionsnummer der Positionen der Menge der k Adressenelemente gespeichert hat. In diesem Fall beinhaltet der Speicher C den Speicher E. Beim Auslesen der größten Positionsnummer ("255" in Fig. 5) wird zu dem ausgelesenen Wert dann der Wert "1" addiert, um den richtigen Wert für k ("256") zu erhalten.

Eine weitere Alternative im Fall k=n ist die direkte Auswahl des ersten Adressenbezeichners durch die Modulo-Berechnung. Dabei ist im Speicher E die Anzahl der k Adressenelemente gespeichert. Diese Adressenelemente entsprechen den reservierten Adressenbezeichnern und bilden eine Menge mit ganzzahligen Elementen von "0" bis n-1. In Schritt 570 wird der erste Adressenbezeichner direkt durch die Berechnung von MSIN mod k ausgewählt. Beispielsweise ergibt sich bei k=n=256 und MSIN=123456 für den ersten Adressenbezeichner der Wert "36". Der Speicher C für die Menge der k Adressenelemente wird in diesem Fall nicht benötigt.

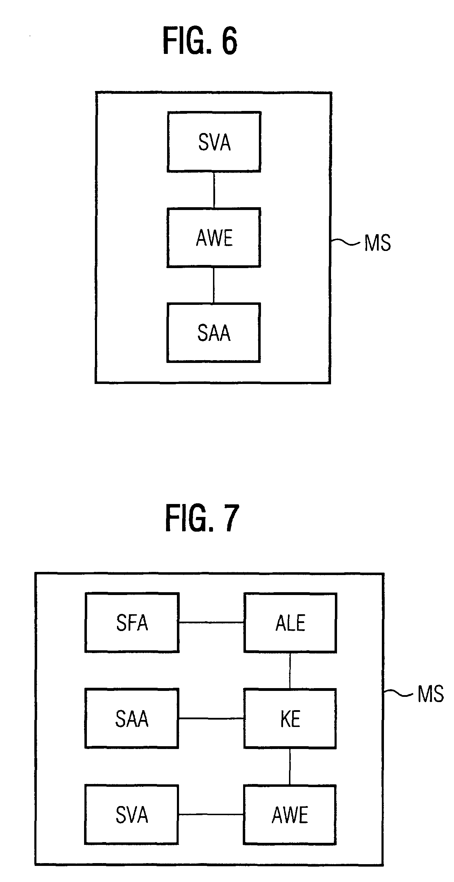

Fig. 6 zeigt eine Kommunikationsvorrichtung MS, welcher die Adresse eines datendienstanbietenden Servers zugeordnet werden kann. Die Kommunikationsvorrichtung MS enthält einen Speicher SVA für eine Menge von k Adressenelementen mit k>1. Die Menge enthält eine Anzahl n von verschiedenen Adressenbezeichnern mit 1<n<=k. Jeder dieser Adressenbezeichner bezeichnet einen Server aus einer Menge von m Servern eines Kommunikationssystems, mit 0<m<=n. Die Kommunikationsvorrichtung MS enthält weiterhin eine Auswahleinheit AWE zur Auswahl eines ersten Adressenbezeichners aus der Menge der k Adressenelemente, sowie einen Speicher SAA für den ausgewählten Adressenbezeichner. Beide Speicher SVA, SAA sind mit der Auswahleinheit AWE verbunden. Bei der Kommunikationsvorrichtung kann es sich beispielsweise um ein Mobiltelefon eines GPRS, PPDC, EDGE oder UMTS Systems handeln, oder beispielsweise um eine sogenannte SIM-Karte für ein Endgerät eines derartigen Kommunikationssystems.

In einer speziellen Ausgestaltung der vorliegenden Erfindung findet die Auswahl des ersten Adressenbezeichners durch die Auswahleinheit mit Hilfe einer Zufallsfunktion statt. Dazu kann die Auswahleinheit beispielsweise eine Schnittstelle (nicht gezeigt in der Figur) zu internen Parametern der Kommunikationsvorrichtung oder des Kommunikationssystems, beispielsweise der Systemzeit, aufweisen, um eine oder mehrere Zufallsvariablen zu erhalten.

Fig. 7 zeigt eine weitere Ausgestaltung der vorliegenden Erfindung. Die Kommunikationsvorrichtung MS enthält zusätzlich zu den schon aus Fig. 6 bekannten Elementen einen Speicher für einen zweiten Adressenbezeichner SFA, eine Ausleseeinheit ALE, welche den zweiten Adressenbezeichner aus dem Speicher auslesen kann, und eine Kombinationseinheit KE, welche den ersten und zweiten Adressenbezeichner zusammensetzen kann. Ein von der Kombinationseinheit KE zusammengesetzter Adressenbezeichner bildet dann einen ausgewählten Adressenbezeichner eines Servers des Kommunikationssystems

Dazu ist die Ausleseeinheit ALE mit dem Speicher SFA und der Kombinationseinheit KE verbunden. Die Kombinationseinheit KE ist zusätzlich mit der Auswahleinheit AWE und dem Speicher SAA verbunden, und die Auswahleinheit AWE ist zusätzlich mit dem Speicher SVA verbunden.

In dieser dargestellten Ausgestaltung der Erfindung enthält der Speicher SFA als zweiten Adressenbezeichner einen festen Adressenteil einer Serveradresse, der für alle m Server des Kommunikationssystems gilt. Der Speicher SVA enthält variable Adressenteile von Serveradressen, welche jeweils einen der m Server des Systems bezeichnen. Die Auswahleinheit AWE kann einen ersten Adressenbezeichner aus dem Speicher SVA auswählen. Der Speicher SAA kann den durch die Kombinationseinheit KE aus dem ersten und zweiten Adressenbezeichner zusammengesetzten Adressenbezeichner, der aus dem festen und einem variablen Adressenteil besteht, und der den ausgewählten Adressenbezeichner bildet, speichern.

Weitere erfindungsgemäße Ausgestaltungen der Kommunikationsvorrichtung MS werden im folgenden beschrieben (ohne Figur).

Die Kommunikationsvorrichtung MS kann zusätzlich einen Speicher für einen numerischen Kommunikationsvorrichtungsbezeichner, beispielsweise eine Registriernummer, eine IMSI oder eine MSIN, sowie eine Ausleseeinheit für diesen Kommunikationsvorrichtungsbezeichner enthalten. Die Auswahleinheit AWE kann die Auswahl des ersten Adressenbezeichner mit Hilfe einer Modulo-Berechnung durchführen.

Weiterhin kann die Kommunikationsvorrichtung MS eine Empfangsvorrichtung aufweisen, um, beispielsweise über eine Luftschnittstelle des Kommunikationssystems, aktualisierte Adressenelemente der Menge der k Adressenelemente zu empfangen. Eine Speichervorrichtung übernimmt das Abspeichern der entsprechenden, aktualisierten Daten. Alternativ oder zusätzlich kann durch eine weitere Empfangs- und Speichervorrichtung auch die Aktualisierung des zweiten Adressenbezeichners erfolgen.

In einer weiteren Ausgestaltung erfolgt eine Anforderung der Aktualisierung der Daten durch eine Anforderungsvorrichtung der Kommunikationsvorrichtung. Diese Anforderungsvorrichtung kann, beispielsweise nach Feststellen eines Fehlers oder in regelmäßigen Zeitabständen, die Aktualisierung von einem Adressenserver DNS des Kommunikationssystems durch das Senden einer entsprechenden Aktualisierungsanforderung anfordern.

Schließlich kann die Kommunikationsvorrichtung zusätzlich eine Benutzerschnittstelle, beispielsweise eine Taste oder eine Spracheingabevorrichtung, aufweisen, durch die ein Benutzer mit Hilfe einer einzigen Benutzeraktion, beispielsweise durch einen Tastendruck oder ein gesprochenes Kommando, eine Datendienstanforderung eingeben kann. Weiterhin ist eine Datendienstanforderungsvorrichtung vorhanden, die den entsprechenden Datendienst danach mit Hilfe einer Anforderungsnachricht an einen Server des Kommunikationsnetzes anfordert. Die Anforderungsnachricht wird mit Hilfe des in der Kommunikationsvorrichtung gespeicherten und ausgewählten Adressenbezeichners des Servers addressiert.

Ein erfindungsgemäßes Kommunikationssystem kann zur Aktualisierung der in den entsprechenden Endgeräten gespeicherten Serveradressendaten neben den in Figur 1 gezeigten Elementen weiterhin einen Adressenserver aufweisen. Mit anderen Worten, der Adressenserver stellt aktualisierte Adressendaten bereit und sendet sie, beispielsweise auf Anforderung durch ein Endgerät oder nach Vorgaben des Netzbetreibers oder Datendienstanbieters, an das anfordernde oder vorgegebene Endgerät. Zusätzlich kann der Adressenserver auch die Aufgaben eines DNS Servers übernehmen.

Eine weitere Ausgestaltung der vorliegenden Erfindung betrifft ein Computerprogramm. Der Begriff "Computerprogramm" im Sinne der vorliegenden Erfindung schließt den Begriff "Computerprogrammprodukt" ausdrücklich ein. Das Computerprogramm, welches in den internen Speicher einer digitalen Rechnereinheit, insbesondere eines Mobiltelefons, geladen werden kann, enthält Softwarecodeteile, die geeignet sind, das beschriebene erfindungsgemäße Verfahren durchzuführen, wenn das Computerprogramm auf der Rechnereinheit ausgeführt wird.

Dieses Computerprogramm kann insbesondere auch auf einem computerlesbaren Medium wie beispielsweise einer Diskette, CD-ROM oder einer optischen Platte gespeichert sein.

## Patentansprüche

1. Verfahren zur Zuordnung einer Adresse eines Servers zu einer Kommunikationsvorrichtung, mit den Schritten
- transparent für einen Benutzer der Kommunikationsvorrichtung Auswählen (310; 430; 570) eines ersten Adressenbezeichners des Servers aus einer Menge von k Adressenelementen (A) mit k>1, bei dem die Menge von k Adressenelementen eine Anzahl n von verschiedenen Adressenbezeichnern mit 1<n<=k enthält, welche jeweils einen Server aus einer Menge von m Servern mit 0<m<=n bezeichnen, und
- Speichern (330; 460; 590) des ausgewählten Adressenbezeichners des Servers in der Kommunikationsvorrichtung.

2. Verfahren nach Anspruch 1, bei dem der Schritt des Auswählens (310; 430; 570) zusätzlich folgende Schritte umfaßt
- Auslesen (410; 510) eines zweiten Adressenbezeichners aus einem Speicher (B, F), und
- Zusammensetzen (450; 580) des ersten und zweiten Adressenbezeichners, bei dem der zusammengesetzte erste und zweite Adressenbezeichner den ausgewählten Adressenbezeichner des Servers bilden.

3. Verfahren nach Anspruch 1 oder 2, bei dem die Adresse des Servers eine IP Adresse ist.

4. Verfahren nach Anspruch 3,
bei dem der erste Adressenbezeichner ein Host Bezeichner der IP Adresse des Servers ist, und
bei dem der zweite Adressenbezeichner der Adresse des Servers ein Netzwerk Bezeichner der IP Adresse ist.

5. Verfahren nach einem der Ansprüche 3 oder 4, bei dem es sich bei der IP Adresse des Servers um eine IPv4 Adresse im Klasse C Format handelt.

6. Verfahren nach einem der Ansprüche 1 bis 5,
bei dem das Auswählen (310; 430; 570) des ersten Adressenbezeichners aus der Menge der k Adressenelemente (A) mit Hilfe einer Zufallsfunktion erfolgt.

7. Verfahren nach einem der Ansprüche 1 bis 5,
bei dem das Auswählen (310; 430; 570) des ersten Adressenbezeichners durch eine Berechnung eines Rest einer Division eines numerischen Bezeichners der Kommunikationsvorrichtung durch eine Anzahl k der Adressenelemente erfolgt.

8. Verfahren nach einem der Ansprüche 1, 2, oder 6, 7
wobei der gespeicherte ausgewählte Adressenbezeichner im alphanumerischen Klartext vorliegt.

9. Verfahren nach einem der Ansprüche 1 bis 8, mit den zusätzlichen Schritten
- Empfangen mindestens eines aktualisierten Adressenelementes der k Adressenelemente durch die Kommunikationsvorrichtung, und
- Speichern des aktualisierten Adressenelementes in der Kommunikationsvorrichtung.

10. Verfahren nach einem der Ansprüche 1 bis 9, mit den zusätzlichen Schritten
- Empfangen eines aktualisierten zweiten Adressenbezeichners durch die Kommunikationsvorrichtung, und
- Speichern des aktualisierten zweiten Adressenbezeichners in der Kommunikationsvorrichtung.

11. Verfahren nach einem der Ansprüche 9 oder 10, mit den zusätzlichen Schritten
- Anfordern einer Aktualisierung von einem Adressenserver (DNS).

12. Kommunikationsvorrichtung (MS) zur Zuordnung einer Adresse eines Servers, von dem ein Datendienst angefordert werden kann, mit
- einem Speicher (SVA) für eine Menge von k Adressenelementen mit k>1, bei dem die Menge von k Adressenelementen eine Anzahl n von verschiedenen Adressenbezeichnern mit 1<n<=k enthält, welche jeweils einen Server aus einer Menge von m Servern mit 0<m<=n bezeichnen,
- einer Auswahleinheit (AWE), welche transparent für einen Benutzer der Kommunikationsvorrichtung (MS) einen ersten Adressenbezeichner aus den k Adressenelementen auswählen kann, und
- einem Speicher (SAA) für den ausgewählten Adressenbezeichner des Servers.

13. Kommunikationsvorrichtung (MS) nach Anspruch 12, weiterhin mit
- einem Speicher (SFA) für einen zweiten Adressenbezeichner,
- einer Ausleseeinheit (ALE), welche den zweiten Adressenbezeichner aus dem Speicher (SFA) auslesen kann, und
- einer Kombinationseinheit (KE), welche den ersten und zweiten Adressenbezeichner zusammensetzt,
und bei welcher der zusammengesetzte erste und zweite Adressenbezeichner den ausgewählten Adressenbezeichner des Servers bildet.

14. Kommunikationsvorrichtung (MS) nach Anspruch 12 oder 13, bei dem die Auswahleinheit (AWE) eine zufällige Auswahl des ersten Adressenbezeichners durchführen kann.

15. Kommunikationsvorrichtung (MS) nach einem der Ansprüche 12 bis 14, weiterhin mit
- einem Speicher für einen numerischen Kommunikationsvorrichtungsbezeichner der Kommunikationsvorrichtung,
- einer zweiten Ausleseeinheit, welche den Kommunikationsvorrichtungsbezeichner aus dem Speicher auslesen kann,
und bei dem die Auswahl des ersten Adressenbezeichners durch die Auswahleinheit mittels einer Berechnung eines Rest einer Division des Kommunikationsvorrichtungsbezeichners durch eine Anzahl der k Adressenelemente erfolgt.

16. Kommunikationsvorrichtung (MS) nach einem der Ansprüche 12 bis 15, weiterhin mit
- einer Empfangsvorrichtung, welche den Empfang von mindestens einem aktualisierten Adressenelement der k Adressenelemente erlaubt, und
- einer Speichervorrichtung, welche das Abspeichern aktualisierter Adressenelemente erlaubt.

17. Kommunikationsvorrichtung (MS) nach einem der Ansprüche 13 bis 16, weiterhin mit
- einer Empfangsvorrichtung, welche den Empfang eines aktualisierten zweiten Adressenbezeichners erlaubt, und
- einer zweiten Speichervorrichtung, welche das Abspeichern des aktualisierten zweiten Adressenbezeichners erlaubt.

18. Kommunikationsvorrichtung (MS) nach Anspruch 16 oder 17, mit einer Anforderungsvorrichtung, welche eine Anforderung einer Aktualisierung von einem Adressenserver (DNS) erlaubt.

19. Kommunikationsvorrichtung (MS )nach einem der Ansprüche 12 bis 18, weiterhin mit
- einer Benutzerschnittstelle, welche eine Eingabe einer Anforderung des Datendienstes des Server durch eine einzige Benutzeraktion ermöglicht, und
- eine Datendienstanforderungsvorrichtung, welche den Datendienst von dem Server mit Hilfe des ausgewählten Adressenbezeichners nach einer eingegebenen Anforderung des Datendienstes anfordert.

20. Kommunikationssystem (KS), mit
- einer Anzahl m, mit m>0, von Servern (AS1, AS2, AS3,AS4), die einen Datendienst anbieten, bei dem die m Server (AS1, AS2, AS3,AS4) durch eine Anzahl n, mit n>1 und n>=m, verschiedener Adressenbezeichner identifiziert werden,
- mindestens einer Basisstation (RBS), welche Datenpakete senden und empfangen kann,
- einem Paketdatennetz (PN), welches Server (AS1, AS2, AS3,AS4) und Basisstationen (RBS) des Kommunikationssystems (KS) verbindet, und
- einer Vielzahl von Kommunikationsendgeräten (MS), welche jeweils eine Paketdatenkommunikation mit mindestens einer Basisstation (RBS) des Kommunikationssystems (KS) erlauben, und welche jeweils geeignet sind, mittels einer nach einem der Ansprüche 1 bis 8 zugeordneten Adresse eines Servers einen Datendienst von diesem Server anzufordern.

21. Kommunikationssystem (KS) nach Anspruch 20, zusätzlich mit mindestens einem Adressenserver (DNS), welcher Adressenbezeichner der Server (AS1, AS2, AS3,AS4) des Kommunikationssystems (KS) zur Aktualisierung an die Kommunikationsendgeräte (MS) des Kommunikationssystems (KS) sendet, und bei dem die Kommunikationsendgeräte (MS) geeignet sind, ein Verfahren nach einem der Ansprüche 9 bis 11 durchzuführen.

22. Computerprogramm, welches in einen internen Speicher einer digitalen Rechnereinheit geladen werden kann, und welches Softwarecodeteile enthält, die geeignet sind, die Schritte nach einem der Ansprüche 1 bis 11 durchzuführen, wenn das Computerprogramm auf der Rechnereinheit ausgeführt wird.

23. Computerprogramm nach Anspruch 22, bei dem das Computerprogramm auf einem computerlesbaren Medium gespeichert ist.
